# EUROPEAN PATENT SPECIFICATION

(11) **EP 1 363 480 B1**
(45) Date of publication and mention of the grant of the patent: **17.01.2007**
(21) Application number: 03010721.3
(22) Date of filing: 13.05.2003
(51) Int. Cl.: H05H 1/34, B23K 10/00

(54) **Abutment device for plasma torch**
Anschlageinrichtung für einen Plasmabrenner
Dispositif de butée pour une torche à plasma

(30) Priority: 14.05.2002 IT BO20020297
(43) Date of publication of application: 19.11.2003
(73) Proprietor: Tec.Mo S.r.l., 40067 Rastignano (Bologna) (IT)
(72) Inventor: Massimo Santini, 40067 Pianoro (Bologna) (IT)
(74) Representative: Negrini, Elena

(56) References cited:
- EP-A- 0 845 929
- EP-A- 0 941 018
- US-A- 5 396 043
- US-A- 5 856 647
- US-A- 6 054 669
- PATENT ABSTRACTS OF JAPAN vol. 1999, no. 10, 31 August 1999 (1999-08-31) & JP 11 123561 A (KOMATSU LTD), 11 May 1999 (1999-05-11)

## Description

The present invention relates to devices for cutting metallic elements and refers to an abutment device for a torch particularly for a plasma torch.

There are known plasma cutting apparatuses provided with manual torches in which the plasma jet generated by a nozzle is used for cutting metallic pieces.

Said known torches are sometimes provided with abutment devices consisting of protrusions fit to maintain the nozzle outlet hole of the plasma jet at a predefined distance from the piece to be cut by mating the latter.

The main drawback of the known abutment devices consists in that they direct a cooling fluid close to the plasma jet so perturbing the latter or in that they do not have an adequate cooling.

Document EP 0 845 929 A1 includes the disclosure of an abutment device for a plasma torch.
Said torch has a nozzle for the plasma exit, partially enclosed by a sleeve, and flow means for a cooling fluid. The device includes a tubular body provided with an end portion for fixing it to the sleeve and a free end.
The body has a plurality of elongated slot to set the flow means in flow communication with the outside of the device.
Document US 5 396 043 discloses a shield device similar to the abutment device document EP 0 845 929 A1 and provided of inclined cylindrical holes instead of slots.

An object of the present invention is to propose an abutment device for plasma torch capable of an excellent cooling and whose cooling fluid flow interferes only partially with the plasma jet.

Other object is to propose a device allowing also to cut the piece at its angles and recesses.

The above-mentioned objects are achieved according to the claim content.

The characteristics of the present invention are underlined in the following, with particular reference to attached drawings, in which:
- figure 1 shows a schematic longitudinal section view of the device of the present invention associated with a plasma torch;
- figure 2 shows a longitudinal section view of the figure device.

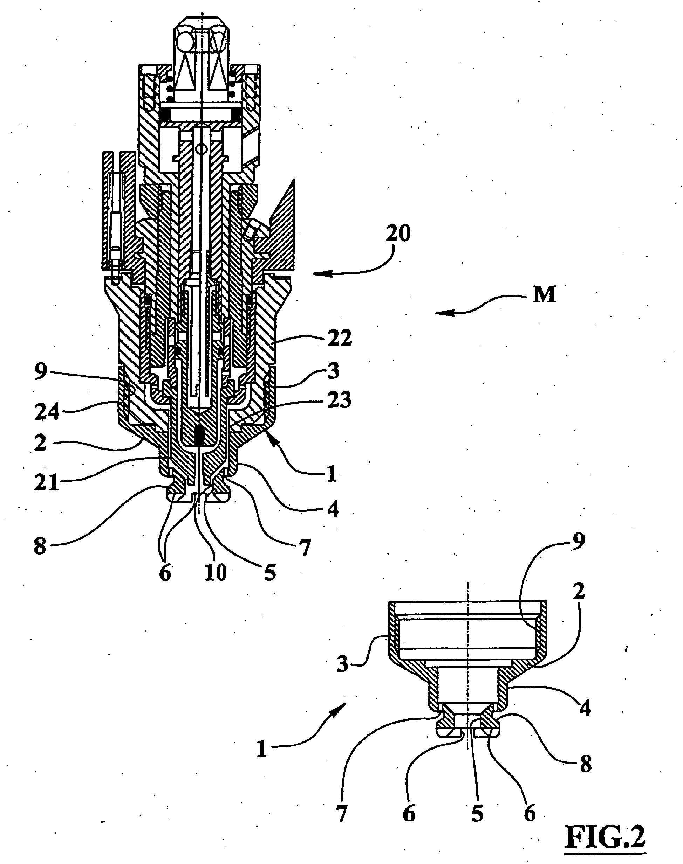

With reference to figure 1 and 2, numeral 1 indicates the device of the present invention associated with a plasma torch 20.

The plasma torch 20 is provided with a nozzle 21, a sleeve 22 and flow means 23 for a cooling fluid.

The nozzle 21 has an axial hole for the plasma jet outlet and the sleeve 22 encloses the nozzle 21.

The flow means 23 are flowed by the fluid for cooling at least the nozzle 21 of the torch and the device 1 and they consist of a toroidal room or of an interspace or, in alternative, of a plurality of ducts.

The device 1 includes at least a body 2 with tapered tubular shape, provided with an end fixing portion 3 to the sleeve 22 and a free end 4 having the external diameter smaller than the external diameter of the end fixing portion 3.

The end portion 3 can be fixed to the sleeve 22 by means of respective threads 9, 24 and the end 4 allows the passage of the plasma jet, in a assemblage condition M of the device 1 to the torch 20.

The body 2 has a plurality of almost axial through holes 7 which set the flow means 23 in flow communication with the outside of the device 1.

The body 2 is provided with baffle means 8 facing the ends of the outlet holes 7 flowing outwards and consisting of an almost conical annular wall having a solid angle ranging between 20° and 60°, preferably of around 45°, and whose geometric vertex is inside the device 1.

The free end 4 has a window 5 facing the plasma jet outlet of the nozzle 21 and provided with a plurality of almost radially positioned indentations 6.

The window 5 is in flow connection with the flow means 23 through an annular interspace 10 delimited by the nozzle 21 and by the inner surface of the free end 4.

The annular interspace 10 is almost axially positioned and has a cross section having a surface with and extension smaller than the overall surface of the sections of the through holes 7.

The operation of the device 1 provides that the operator can lean the device 1 against the piece to be cut, mating the latter by means of the free end 4 of the body 2, even in correspondence of angles and recesses thereof.

The indentations 6 allow the almost radial exit of the portion of the fluid flow, spurting through the window 5, and of the vapors, smokes or gas produced by the cutting, avoiding to perturb the plasma jet.

The outlet holes 7, in collaboration with the baffle means 8, allow the remaining portion of the fluid flow to cool the body 2. The baffle means 8 divert said flow, removing it from the cutting area in order to avoid perturbations of the plasma jet.

The axial disposition and the dimensions of the interspace 10 avoid that the flow of fluid adjacent to the plasma jet can generate harmful perturbations for said plasma jet.

The invention further provides that the end portion 3 can be fixed to the sleeve 22 by fixed joint, alternatively to the threads 9, 24. It is in addition provided that said fixed joint is obtained by seal ring, for instance an O-Ring seal, associated with the end portion 3.

It is important to observe that the tapered shape of the device 1 advantageously allows operating with the torch also in angles and recesses of the piece to be cut.

An advantage of the present invention is to provide an abutment device for plasma torch capable of an excellent cooling and whose cooling fluid flow interfere only partially with the plasma jet.

Other advantage is to provide a device allowing also to cut the piece at its angles and recesses.

## Claims

1. Abutment device for use in combination with a plasma torch (20), the torch having at least a nozzle (21), for the plasma exit and at least partially enclosed by a sleeve (22), and having flow means (23) for a cooling fluid, the device (1) being **characterized in that** it includes at least a body (2), of tubular shape, in an assemblage condition provided with an end fixing portion (3) to the sleeve (22) and a free end (4), the body (2) having a plurality of almost axial through holes (7) which set in an assemblage condition the flow means (23) in flow communication with the outside of the device (1) and being provided with baffle means (8) facing the ends of the through, holes (7) which flow outwards; wherein in an assemblage condition (M) of the device (1) to the torch (20), the free end (4) being fit for the free passage of the plasma and for mating a piece to be cut, the through holes (7) and the baffle means (8) being respectively fit for the passage of at least a portion of the cooling fluid flow and to divert said portion of flow for moving away the latter from the plasma.

2. Abutment device according to claim 1 **characterized in that** the baffle means (8) consist of an almost conical annular wall having a solid angle ranging between 20° and 60°, preferably of around 45°, and whose geometric vertex is inside the device.

3. Abutment device according to claim 1 **characterized in that** the free end (4) has a window (5) facing the plasma jet exit of the nozzle (21) and provided with a plurality of indentations (6).

4. Abutment device according to claim 3 **characterized in that** the window (5) is in flow connection with the flow means (23) through an annular interspace (10) delimited by the nozzle (21) and by the inner surface of the free end (4).

5. Abutment device according to claim 4 **characterized in that** the annular interspace (10) is almost axially positioned.

6. Abutment device according to claim 4 **characterized in that** the annular interspace (10) has a cross section having surface smaller than the overall surface of the sections of through holes (7).

7. Abutment device according to claim 1 **characterized in that** the free end (4) has an external diameter smaller than the diameter of the end fixing portion (3).

8. Abutment device according to claim 1 **characterized in that** the end portion (3) is fixed to the sleeve (22) by means of threads (9, 24).

9. Abutment device according to claim 1 **characterized in that** the end portion (3) is fixed to the sleeve (22) by means of a fixed joint.

10. Abutment device according to claim 9 **characterized in that** the end portion (3) is provided with a seal ring for fixing the sleeve (22) by means of a fixed joint.

## Patentansprüche

1. Anschlagvorrichtung zur Verwendung in Kombination mit einem Plasmabrenner (20), der mindestens eine Düse (21) für den Plasmaaustritt, die mindestens teilweise von einer Hülse (2) umgeben wird, und Strömungseinrichtungen (23) für ein Kühlmittel aufweist, **dadurch gekennzeichnet, dass** die Vorrichtung mindestens einen Korpus (2) mit rohrförmiger Form im Montagezustand besitzt, der mit einem Endfixierabschnitt (3) an der Hülse (22) und einem freien Ende (4) versehen ist und eine Vielzahl von nahezu axialen Durchgangslöchern (7), die im montierten Zustand die Strömungseinrichtungen (23) in Strömungsverbindung mit der Außenseite der Vorrichtung (1) bringen, und Umlenkeinrichtungen (8) aufweist, die den Enden der nach außen weisenden Durchgangslöcher (7) gegenüberliegen, wobei im montierten Zustand (M) der Vorrichtung (1) am Plasmabrenner (20) das freie Ende (4) für den freien Durchgang des Plasmas und zur Anpassung an ein zu schneidendes Teil ausgebildet ist und die Durchgangslöcher (7) sowie die Umlenkeinrichtungen (8) jeweils für den Durchgang von mindestens einem Teil des Kühlmittelstromes sorgen und diesen Teil des Stromes ablenken, um ihn vom Plasma wegzubewegen.

2. Anschlagvorrichtung nach Anspruch 1, **dadurch gekennzeichnet, dass** die Umlenkeinrichtungen (8) aus einer nahezu konischen Ringwand bestehen, die einen festen Winkel aufweist, der zwischen 20° und 60° liegt, vorzugsweise etwa 45° beträgt und dessen geometrischer Scheitelpunkt innerhalb der Vorrichtung angeordnet ist.

3. Anschlagvorrichtung nach Anspruch 1, **dadurch gekennzeichnet, dass** das freie Ende (4) ein Fenster (5) besitzt, das dem Plasmastrahlaustritt der Düse (21) gegenüberliegt und mit einer Vielzahl von Vertiefungen (6) versehen ist.

4. Anschlagvorrichtung nach Anspruch 3, **dadurch gekennzeichnet, dass** das Fenster (5) über einen ringförmigen Zwischenraum (2), der von der Düse (21) und von der Innenfläche des freien Endes (4) begrenzt wird, mit den Strömungseinrichtungen (23) in Strömungsverbindung steht.

5. Anschlagvorrichtung nach Anspruch 4, **dadurch gekennzeichnet, dass** der ringförmige Zwischenraum (10) nahezu axial angeordnet ist.

6. Anschlagvorrichtung nach Anspruch 4, **dadurch gekennzeichnet, dass** der ringförmige Zwischenraum (10) einen Querschnitt besitzt, dessen Fläche kleiner ist als die Gesamtfläche der Querschnitte der Durchgangslöcher (7).

7. Anschlagvorrichtung nach Anspruch 1, **dadurch gekennzeichnet, dass** das freie Ende (4) einen Außendurchmesser aufweist, der kleiner ist als der Durchmesser des Endfixierabschnittes (3).

8. Anschlagvorrichtung nach Anspruch 1, **dadurch gekennzeichnet, dass** der Endabschnitt (3) mit Hilfe von Gewinden (9, 24) an der Hülse (22) befestigt ist.

9. Anschlagvorrichtung nach Anspruch 1, **dadurch gekennzeichnet, dass** der Endabschnitt (3) mit Hilfe einer festen Verbindung an der Hülse (22) befestigt ist.

10. Anschlagvorrichtung nach Anspruch 9, **dadurch gekennzeichnet, dass** der Endabschnitt (3) mit einem Dichtungsring zur Fixierung der Hülse (2) mit Hilfe einer festen Verbindung versehen ist.

## Revendications

1. Dispositif de butée destiné à être utilisé en association avec une torche à plasma (20), la torche comportant au moins une buse (21), pour la sortie de plasma et au moins partiellement entourée par un manchon (22), et comportant des moyens d'écoulement (23) pour un fluide de refroidissement, le dispositif (1) étant **caractérisé en ce qu'**il comprend au moins un corps (2) de forme tubulaire dans un état d'assemblage pourvu d'une partie de fixation d'extrémité (3) au manchon (22) et une extrémité libre (4), le corps (2) comportant une pluralité de trous traversants presque axiaux (7) qui fixent dans un état d'assemblage les moyens d'écoulement (23) en communication d'écoulement avec l'extérieur du dispositif (1) et étant pourvu de moyens déflecteurs (8) faisant face aux extrémités des trous traversants (7) qui donnent sur l'extérieur ; dans lequel, dans une condition d'assemblage (M) du dispositif (1) sur la torche (20), l'extrémité libre (4) est prévue pour le passage libre du plasma et pour l'ajustement d'une pièce destinée à être coupée, les trous traversent (7) et les moyens déflecteurs (8) étant respectivement prévus pour le passage d'au moins une partie de l'écoulement de fluide de refroidissement et pour dévier ladite partie d'écoulement et éloigner cette dernière du plasma.

2. Dispositif de butée selon la revendication 1, **caractérisé en ce que** les moyens déflecteurs (8) sont constitués d'une paroi annulaire presque conique présentant un angle solide compris entre 20° et 60°, de préférence d'environ 45°, et dont le vertex géométrique est à l'intérieur du dispositif.

3. Dispositif de butée selon la revendication 1, **caractérisé en ce que** l'extrémité libre (4) comporte une fenêtre (5) faisant face à la sortie de jet de plasma de la buse (21) et pourvue d'une pluralité d'indentations (6).

4. Dispositif de butée selon la revendication 3, **caractérisé en ce que** la fenêtre (5) est en connexion d'écoulement avec les moyens d'écoulement (23) par l'intermédiaire d'un écartement annulaire (10) délimité par la buse (21) et par la surface intérieure de l'extrémité libre (4).

5. Dispositif de butée selon la revendication 4, **caractérisé en ce que** l'écartement annulaire (10) est presque positionné de façon axiale.

6. Dispositif de butée selon la revendication 4, **caractérisé en ce que** l'écartement annulaire (10) présente une section transversale comportant une superficie plus petite que la superficie globale des sections de trous traversants (7).

7. Dispositif de butée selon la revendication 1, **caractérisé en ce que** l'extrémité libre (4) présente un diamètre externe inférieur au diamètre de la partie de fixation d'extrémité (3).

8. Dispositif de butée selon la revendication 1, **caractérisé en ce qu'**une partie d'extrémité (3) est fixée au manchon (22) au moyen de filetage (9, 24).

9. Dispositif de butée selon la revendication 1, **caractérisé en ce qu'**une partie d'extrémité (3) est fixée au manchon (22) au moyen d'un joint fixe.

10. Dispositif de butée selon la revendication 9, **caractérisé en ce qu'**une partie d'extrémité (3) est pourvue d'une bague d'étanchéité pour fixer le manchon (22) au moyen d'un joint fixe.
